# EUROPÄISCHE PATENTANMELDUNG

(11) **EP 0 688 591 A1**
(43) Veröffentlichungstag der Anmeldung: **27.12.1995**
(21) Anmeldenummer: 95105688.6
(22) Anmeldetag: 19.05.1995
(51) Int. Cl.: B01D 21/01, C02F 1/52, E21B 21/00

(54) **Verfahren zur Aufbereitung von gebrauchten wässrigen Alkalibentonit-Suspensionen**

(30) Priorität: 18.06.1994 DE 4421455
(71) Anmelder: SÜD-CHEMIE AG, D-80333 München (DE)
(72) Erfinder: Freiberg, Peter, D-87669 Rieden a. F. (DE); Hein, Wolfgang, D-80331 München (DE); Hentze, Monika, D-01239 Dresden (DE); Stützer, Albert, Dr., D-85465 Langenpreising (DE); Tietze, Rainer. Dr., D-01279 Dresden (DE); Friedrich, Hannelore, D-01239 Dresden (DE)
(74) Vertreter: Patentanwälte Dipl.-Ing. R. Splanemann Dr. B. Reitzner Dipl.-Ing. K. Baronetzky

(57) **Zusammenfassung**

Beschrieben wird ein Verfahren zur Aufarbeitung von gebrauchten wäßrigen Alkalibentonit-Suspensionen durch Ausflocken der Suspension und Abtrennen der Flocke von der überstehenden Flüssigkeit; das Verfahren ist dadurch gekennzeichnet, daß man
(a) die Suspension durch Zugabe von wasserlöslichen Salzen zwei- und/oder dreiwertiger Metalle auf einen pH-Wert von etwa 8 ± 1 und auf eine ungefähr neutrale Grenzflächenladung der Bentonitteilchen einstellt;
(b) der so vorbehandelten Suspension nacheinander oder gleichzeitig einen kationischen und einen anionischen Polyelektrolyten zusetzt, wobei der kationische Polyelektrolyt die Grenzflächenladung der Bentonitteilchen leicht anhebt und der anionische Polyelektrolyt die Grenzflächenladung der Bentonitteilchen leicht absenkt, wobei man das Verhältnis zwischen kationischem und anionischem Polyelektrolyt so wählt, daß die Grenzflächenladung der Bentonitteilchen ungefähr neutral wird, und eine mechanisch stabile Flocke entsteht, und
(c) die Flocke von der klaren Flüssigkeit abtrennt.

## Beschreibung

Die Erfindung betrifft ein Verfahren zur Aufbereitung von gebrauchten wäßrigen Alkalibentonit-Suspensionen durch Ausflocken der Suspension und Abtrennen der Flocke von der überstehenden Flüssigkeit.

Wäßrige Alkalibentonit-Suspensionen, insbesondere Natriumbentonit-Suspensionen werden in der Bohr- und Bauindustrie, z.B. im Schlitzwand- und Tunnelbau, bei Rohrdurchpressungen und Schachtabsenkungen zur Verfestigung des umgebenden Bodens eingesetzt. Die Wirkung der Bentonit-Suspensionen beruht auf den thixotropen Eigenschaften des Natriumbentonits aufgrund der starken innerkristallinen Quellfähigkeit des Hauptminerals Natrium-Montmorillonit.

Damit es zu einer Stützwirkung der Bentonitsuspension kommt, muß neben dem spezifischen Gewicht der Suspension eine entsprechende Fließgrenze (Viskosität) eingestellt werden. Je nach Bodenart und Fließgrenze dringt die flüssige Suspension mehr oder weniger stark in den Boden ein, und es entsteht unter Ausbildung eines Filterkuchens eine "kohäsive Zone", die für die Standfestigkeit der mit der Natriumbentonit-Suspension gestützten Erdwände wesentlich ist.

Die überschüssige Suspension, die nicht in den Boden eindringt, wird entfernt. Sie enthält noch gröbere Bestandteile, wie Sand, Erde, Humus und Kies sowie im Schlitzwandbau auch Zement. Die gröberen Bestandteile werden im allgemeinen durch Sedimentation oder Zentrifugation abgetrennt, so daß die Bentonitsuspension noch mehrmals verwendet werden kann. Nach mehrmaliger Wiederverwendung ist aber die zur Stützung des Bodens erforderliche Fließgrenze nicht mehr ausreichend. Dies beruht einerseits darauf, daß der Bentonit durch andere kolloidale Substanzen (z.B. nicht quellfähige Tone) verunreinigt wird und andererseits darauf, daß der Natriumbentonit mit Calciumionen aus dem Boden oder aus dem Zement reagiert, wobei Calciumbentonit gebildet wird, der eine geringere Quellfähigkeit hat. Wenn nachstehend allgemein von Bentonit-Suspensionen die Rede ist, versteht man darunter Natriumbentonit-Suspensionen, die einen mehr oder weniger großen Anteil an Calciumbentonit enthalten.

Die verbrauchte Bentonitsuspension wurde bisher deponiert, was aber aus Gründen des Umweltschutzes bedenklich ist, da die Suspension einen pH-Wert von etwa 9 bis 13 hat. Eine Neutralisation mit Säure würde zu einer Erhöhung der Salzfracht führen; außerdem würden in einer mit Säure neutralisierten Suspension die Bentonitteilchen immer noch in kolloidaler Form vorliegen, so daß sie nicht leicht von der Flüssigkeit abgetrennt werden können.

Man hat daher bereits versucht, die kolloidalen Bentonitteilchen von verbrauchten Bentonitsuspensionen durch Ausflocken in eine filtrierbare Form überzuführen. So werden nach der JP-A-74-6484 (CA 84 (10): 65071 c) bentonithaltige Abwässer von Baustellen mit einer Dichte von 1,01 bis 1,5 mit organischen anionischen Flockungsmitteln und organischen oder anorganischen kationischen Flockungsmitteln behandelt. Beispielsweise wird eine Bentonitsuspension mit einer Dichte von 1,3 mit 2% Calciumsulfat-Dihydrat (CaSO₄ · 2H₂O) und 200 ppm teilweise hydrolysiertem Polyacrylamid versetzt, wobei sich eine Primärflocke bildet. Dann werden 120 ppm eines kationischen Polyacrylamid-Flockungsmittels zugesetzt, wobei sich eine Sekundärflocke bildet. Bei der Filtration unter einem Druck von 0,5 kg/cm² wird ein Filterkuchen mit einem Wassergehalt von 41,5% erhalten.

Aus der JP-A-89-299552 (CA 115 (22): 238991s) werden bentonithaltige Suspensionen mit 0,2 bis 5 Gew.-% (bezogen auf den Feststoffgehalt der Suspension) eines wasserlöslichen Acrylsäurepolymers (Molekulargewicht ≧ 2 Millionen) mit ≧ 15 Mol% monomeren Acrylsäureeinheiten, und dann mit wasserlöslichen Salzen mehrwertiger Metalle behandelt, wobei Flocken erhalten werden, die entwässert werden. Beispielsweise wird ein Abwasserschlamm mit dem Natriumsalz einer Polyacrylsäure mit einem Molekulargewicht von 3 Millionen mit CaCl₂ behandelt, wobei eine Flocke gebildet wird, die entwässert werden kann. Eine Verminderung des alkalischen pH-Wertes erfolgt nicht.

Aus der JP-A-73-40161 (CA 84 (14): 95282q) werden Zement oder Ca(OH)₂ bentonithaltigen Baustellensuspensionen zugesetzt, worauf die Suspensionen mit synthetischen polymeren Flockungsmitteln vermischt und durch Absetzen oder Filtration entwässert werden. Beispielsweise wird ein Schlamm, der 11% Bentonit, 2% Carboxymethylcellulose und 210% Wasser (bezogen auf den Schlamm) sowie Spurenmengen von Ton und feinen Sand enthält, nacheinander mit 5% Zement und 2,5 ppm eines polymeren Flockungsmittels vermischt und anschließend filtriert. Der erhaltene Schlamm enthält 75% Wasser. Bei dem Verfahren wird der alkalische pH-Wert des Schlammes nicht herabgesetzt.

Aus der JP-A-86-267 455 (CA 110 (12): 101222u) ist ein Verfahren bekannt, nach welchem eine bentonithaltige Baustellensuspension mit einem Ionenaustauscher in der Alkaliform oder mit einer anorganischen Säure zur Einstellung des pH-Wertes behandelt wird, worauf die vorbehandelte Suspension in einen entwässerten Filterkuchen und eine überstehende Flüssigkeit getrennt wird. Der entwässerte Filterkuchen wird z.B. mit einem Kalk-Gips-Gemisch im Verhältnis 1 bis 9:5 Klärschlamm, Asche und Zement vermischt, und das Gemisch wird zu Formkörpern extrudiert, die zur Wegebefestigung verwendet werden. Aus der überstehenden Flüssigkeit werden die suspendierten Feststoffe entfernt, und der pH-Wert wird vor dem Einleiten in das Abwassersystem auf etwa 7,0 eingestellt.

Aus der DD-A-298 904 ist ein Verfahren zur kontinuierlichen Entfernung und Behandlung von wäßrigen Flüssigkeiten und Bohrlochrückständen bekannt, wobei die Abwässer homogenisiert und durch Einstellung des pH-Wertes destabilisiert werden. Das so behandelte Abwasser wird gerührt, um ein Absetzen zu vermeiden, und mit Wasser verdünnt, wobei eine Flockung auftreten soll. Man läßt die Flocke absetzen, trennt das Wasser und die Feststoffe und arbeitet die Feststoffe auf bzw. deponiert sie; das Abwasser wird zu einer Behandlungsanlage geleitet und kann wegen des geringen Kolloidgehalts deponiert werden. Bei Verwendung einer salzhaltigen Tonsuspension kann eine Entsalzung vorgenommen werden.

Nach der Literaturstelle "Abwassertechnologie: Entstehung, Ableitung, Behandlung und Analytik der Abwässer"/hrs. im Auftrag der GTZ; Berlin; Heidelberg; New York; London; Paris, Tokio: Springer 1988, Seiten 898 bis 903, können Abwässer im allgemeinen durch Zugabe von organischen Flockungsmitteln (vorwiegend kationaktive Polyelektrolyte) in das Innere einer Zentrifuge in die Klärzone eindosiert werden, wodurch sich die Feststoffausbeute verbessern läßt. Der Vorteil der Dosierung von Polyelektrolyten wird im Gegensatz zu Verwendung von (nichtspezifizierten) anorganischen Flockungsmitteln in der Vermeidung einer künstlichen Feststoffzufuhr gesehen. Eine Entwässerung des Schlammes kann mit Filterpressen erfolgen. Der zu entwässernde Schlamm kann mit anorganischen Flockungsmitteln, wie Eisen- und Aluminiumsalzen und Kalk, konditioniert werden. Als Filterpressen können Membranfilterpressen verwendet werden. Bei dieser Weiterentwicklung der Kammerfilterpressen ist zwischen zwei Platten eine Membranplatte angeordnet, die sich beim Füllen mit Wasser oder Luft ausdehnt und dabei auf die benachbarten Kammern drückt. Die Füllung der Presse mit Schlamm erfolgt nicht mit Hochdruck wie bei der normalen Filterpresse, sondern der Druck wird gleichmäßiger verteilt und der Füll- und Pressvorgang ist schonender. Mit diesem Verfahren sollen sich insbesondere schlecht entwässerbare Schlämme besser filtrieren lassen.

Aus der DE-B-2 428 928 ist ein Verfahren zur Behandlung von Suspensionen mit einer Konzentration an suspendierten Feststoffteilchen bis zu 10 g/l bekannt, bei dem der Suspension zunächst ein anorganisches Metallsalz-Flockungsmittel und danach mindestens 0,5 ppm eines hochmolekularen anionischen organischen Flockungsmittels zugesetzt werden, worauf die Suspension nach Zugabe der Flockungsmittel verrührt wird und die ausgeflockten Teile anschließend von der Flüssigkeit abgetrennt werden. Ein kationisches Flockungsmittel wird nicht zugesetzt. Die Zugabe des anionischen Flockungsmittels wird vorgenommen, bevor die Umsetzung des Metallions des anorganischen Flockungsmittels in ein Metallhydroxid abgeschlossen ist. Soweit es sich bei den Suspensionen um Suspensionen von Tonteilchen handelt, bestehen diese aus Kaolin.

Aus der DE-A-2 739 715 ist ein Verfahren zur Behandlung von Schlammrückständen von Erdbohrungen bekannt, wobei man die Schlämme vor der Abtrennung mit einem oder mehreren Ausflockungsmitteln versetzt. Als Ausflockungsmittel sind Kalk- oder Eisensalze sowie anionische, organische Polyelektrolyte, insbesondere Polyamide mit einem Ionisierungsgrad von über 25% genannt, die in einer Menge von 0,2 bis 0,4 Gew.-%, bezogen auf die Trockensubstanz im Schlamm, zugesetzt wird. Der organische Polyelektrolyt wird vorzugsweise dem vereinten Koagulans von Kalk- und Eisensalz zugesetzt, wobei der Kalk im Überschuß vorhanden ist, so daß das Medium alkalisch ist. Außerdem wird kein kationischer Polyelektrolyt verwendet.

Aus der DE-A-4 141 485 ist ein Verfahren zur Aufbereitung und/oder Entsorgung von aufgesalzenen Bohrspülungen mit etwa 100 bis 300 g KCl/Liter bekannt, bei dem die gebrauchte Bohrspülung mit anorganischen und/oder organischen Konditionierungsmitteln versetzt, die konditionierte Bohrspülung in eine feste und eine flüssige Phase getrennt, und die abgetrennten Phasen im Kreislauf geführt oder deponiert werden. Als Konditionierungsmittel sind anionische und kationische synthetische Flockungsmittel (Polyelektrolyte) genannt, wobei die anionischen Flockungsmittel vor den kationischen Flockungsmitteln zugesetzt werden. Dies bedingt einen hohen Flockungsmittelverbrauch. Als anorganische Fällungsmittel sind Al⁺³ und/oder Fe⁺³-Salze genannt, über deren Dosierungszeitpunkt jedoch nichts gesagt ist.

Aus der DE-B-2 025 725 ist ein Flockungsmittel zum Ausflocken fester Teilchen aus wäßrigen Medien auf der Basis von Acrylmonomeren bekannt, die als wasserlösliche Terpolymere von Acrylamid, teilweise neutralisierter Acrylsäure und Acrylnitril mit einem Molekulargewicht von mehr als 400.000 vorliegen. In den Ausführungsbeispielen wird zunächst die Flockung von suspendiertem Aluminiumoxid mit dem Terpolymer beschrieben. Anschließend ist ein Beispiel zur Flockung von montmorillonithaltigen Tontrüben unter Verwendung des Terpolymers beschrieben, wobei neben der gesteigerten Sedimentationsgeschwindigkeit der Flocken die Reduktion des chemischen Sauerstoffbedarfs dokumentiert wird. Es finden sich keine Angaben über Suspensionen von alkalisch aktiviertem Bentonit. Bei diesen Suspensionen reicht der Einsatz nur eines Polymers zur Flockung nicht aus, da der Verbrauch der Flockungschemikalie sehr hoch ist und die dabei entstehenden Flocken wegen ihrer geringen Festigkeit eine mechanische Entwässerung nur bis zu einem mäßigen Feststoffgehalt zulassen.

Aus der DE-A-2 311 222 ist ein Verfahren zum Klären von suspendierte Feststoffe enthaltendem Wasser bekannt, bei dem dem Wasser etwa 0,1 bis 20 ppm einer vorgemischten Lösung eines kationischen und eines nichtionischen Polymers zugegeben wird. Anionische Polymere sind nicht erwähnt. Das Poylmerengemisch wird zur Reinigung von Flußwasser verwendet, wobei auch Aluminium- und Eisensalze zugesetzt werden. Flußwasser ist jedoch mit wäßrigen Alkali-Bentonit-Suspensionen nicht vergleichbar.

Die DE-A-2 623 748 betrifft ein Verfahren zur Reinigung von trübem Wasser, das Ton oder andere Fremdmaterialien enthält. Dem trüben Wasser werden mehrwertige Metallionen und ein Poly(aminomethylacrylat) zugegeben, worauf in die entstehende Suspension bei einem pH-Wert von etwa 6 bis 10 zur Flotation Blasen eingeleitet werden. Es finden sich keine Hinweise auf die Behandlung von Suspensinen von Alkalibentoniten. Auch anionische Polymere werden nicht verwendet.

Der Erfindung liegt die Aufgabe zugrunde, ein Verfahren zur Aufarbeitung von gebrauchten wäßrigen Alkalibentonit-Suspensionen bereitzustellen, wobei einerseits eine gut abtrennbare Flocke und andererseits eine klare überstehende Flüssigkeit erhalten wird.

Gegenstand der Erfindung ist ein Verfahren zur Aufarbeitung von gebrauchten wäßrigen Alkalibentonit-Suspensionen durch Ausflocken der Suspension und Abtrennen der Flocke von der überstehenden Flüssigkeit, das dadurch gekennzeichnet ist, daß man
(a) die Suspension durch Zugabe von wasserlöslichen Salzen zwei- und/oder dreiwertiger Metalle auf einen pH-Wert von etwa 8 ± 1 und auf eine ungefähr neutrale Grenzflächenladung der Bentonitteilchen einstellt;
(b) der so vorbehandelten Suspension nacheinander oder gleichzeitig einen kationischen und einen anionischen Polyelektrolyt zusetzt, wobei der kationische Polyelektrolyt die Grenzflächenladung der Bentonitteilchen leicht anhebt und der anionische Polyelektrolyt die Grenzflächenladung der Bentonitteilchen leicht absenkt, wobei man das Verhältnis zwischen kationischem und anionischem Polyelektrolyt so wählt, daß die Grenzflächenladung der Bentonitteilchen ungefähr neutral ist, und eine mechanisch stabile Flocke entsteht, und
(c) die Flocke, vorzugsweise durch Filtration, von der klaren Flüssigkeit abtrennt.

Durch die vorgeschaltete Behandlung der Suspension mit den anorganischen Salzen (Stufe a) kann der Bedarf an Polyelektrolyten gegenüber bekannten Verfahren in der Stufe (b) gesenkt werden.

Vorzugsweise geht man von einer Bentonitsuspension mit einem Feststoffgehalt von etwa 2 bis 12 Gew.-%, einem Salzgehalt von weniger als 100 g/Liter und einem pH-Wert von etwa 9 bis 13 aus.

Hierbei haben die Bentonitsuspensionen aus Bohrspülungen im allgemeinen einen höheren Salzgehalt, insbesondere, wenn die Bohrung durch salzführende Bodenschichten geführt wird. Die Bentonitsuspensionen aus dem Schlitzwandbau und ähnlichen bautechnischen Anwendungen haben im allgemeinen einen verhältnismäßig niedrigen Salzgehalt (<80 g/Liter, insbesondere < 50 g/Liter).

Auf der Stufe (a) setzt man vorzugsweise eine Lösung zu, die mindestens ein Al⁺³- und/oder Fe⁺³-Salz und gegebenenfalls ein Mg⁺² und/oder Ca⁺²-Salz einer Mineralsäure, vorzugsweise der Chlorwasserstoffsäure oder Schwefelsäure, enthält.

Insbesondere setzt man eine Salzlösung aus dem sauren Aufschluß von Bentonit mit folgender Zusammensetzung ein:

| | |
|---|---|
| Al⁺³: | 1 bis 5 Gew.-% |
| Fe⁺³: | 0,5 bis 3 Gew.-% |
| Ca⁺²: | 0,2 bis 2 Gew.-% |
| Mg⁺²: | 0,1 bis 1 Gew.-% |
| Chlorid: | 7 bis 30 Gew.-% |
| Freie HCl: | 0,1 bis 0,5 Gew.-% |

Vorzugsweise stellt man auf der Stufe (a) die Grenzflächenladung der Bentonitteilchen auf ein Zetapotential von etwa 0 bis -5 mV ein.

Das Zetapotential kann mit kommerziell erhältlichen Meßgeräten ermittelt werden. Es werden die elektrophoretische Beweglichkeit der Teilchen sowie ihre Größe und die Dichte der Suspension bestimmt. Aus diesen Daten wird das Zetapotential errechnet. Im vorliegenden Fall wurde das Zetapotential mit einem "Zeta Sizer 42" von Malvern Instruments, Inc. (USA), an einer verdünnten Alkalibentonit-Suspension mit einem Feststoffgehalt von 0,1 Gew.-% gemessen.

Die Teilchengrößenverteilung in der Suspension wurde mit einem "PAR-TEC 100"-Gerät der Firma LASENTEC (USA) bestimmt. Das Gerät arbeitet nach der Laser-Scanning-Methode, wobei die Laserlichtrückstreuung die Bestimmung der Teilchengrößenverteilung erlaubt.

Allgemein bezeichnet man als Polyelektrolyte Polymere und Copolymere mit ionisch dissoziierbaren Gruppen, die Bestandteil oder Substituent der Polymerkette sein können. Je nach Art der dissoziierbaren Gruppen unterteilt man die Polyelektrolyte in Polysäuren und Polybasen. Aus Polysäuren entstehen unter Abspaltung von Protonen Polyanionen. Die Polysäuren enthalten im allgemeinen folgende monomere Einheiten: 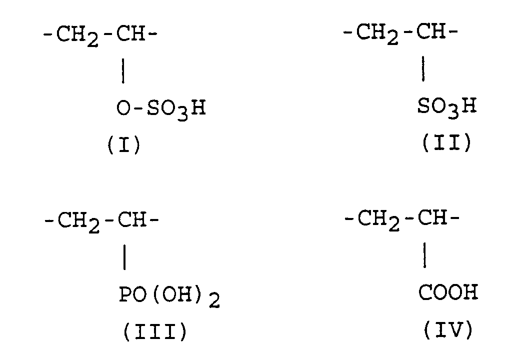
Polybasen enthalten als pro-ionische Gruppen solche, deren Stickstoffatome durch Reaktion mit Säuren oder (vorzugsweise) Methylhalogeniden quaternisiert werden. Typische Polybasen enthalten im allgemeinen folgende monomere Einheiten: 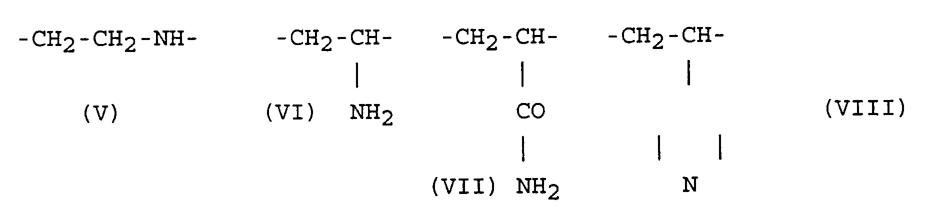
Aus den monomeren Einheiten gemäß Formel (VII) erhält man durch Quaternisierung eine monomere Einheit der Formel 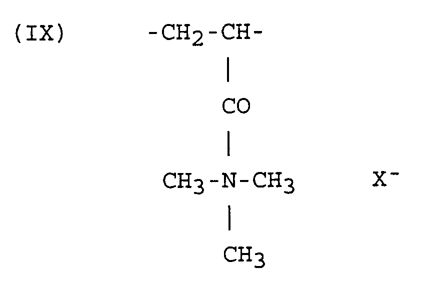
Erfindungsgemäß verwendet man auf der Stufe (b) vorzugsweise einen kationischen Polyelektrolyt aus der Gruppe der Polyacrylamide, vorzugsweise ein Copolymer aus Acrylamid (Formel VII) und einem kationischen Comonomer (Formel IX); und einen anionischen Polyelektrolyten aus der Gruppe der Polyacrylamide, vorzugsweise ein Copolymer aus Acrylamid (Formel VII) und Acrylat (Formel IV, deprotoniert).

Die kationischen Polyelektrolyte haben vorzugsweise eine mittlere Molmasse von etwa 10⁶ bis 5 x 10⁷, insbesondere von etwa 8 x 10⁶ g/Mol. Die anionischen Polyelektrolyte haben im allgemeinen eine mittlere Molmasse von etwa 5 x 10⁶ bis 10⁸, insbesondere von etwa 20 x 10⁶ g/Mol.

Die Polyelektrolyte (Stufe b) werden den bereits mit der Metallsalzlösung behandelten Alkalibentonit-Suspensionen (Stufe a) zugesetzt, und zwar dann, wenn die Metallsalze praktisch vollständig mit den Bentonitteilchen reagiert haben. Im allgemeinen ist dies nach 1 bis 3 Minuten der Fall. Die Polyelektrolyte werden in jeweils solchen Mengen zugesetzt, daß sie die Grenzflächenladung der Bentonitteilchen um einen kleinen Betrag nach oben bzw. nach unten verschieben.

Vorzugsweise stellt man auf der Stufe (b) die Grenzflächenladung der modifizierten Bentonitteilchen auf ein Zetapotential von etwa -3 bis +5 mV, insbesondere auf etwa -2 bis +2 mV ein.

Setzt man den kationischen und den anionischen Polyelektrolyten nacheinander zu, so wird die Menge des kationischen Polyelektrolyten so gewählt, daß zunächst eine Erhöhung des Zetapotentials um etwa 2 bis 12 mV erfolgt. Der anionische Polyelektrolyt wird anschließend in einer solchen Menge zugesetzt, daß sich das Zetapotential um etwa 2 bis 6 mV erniedrigt.

Vorzugsweise stellt man das Ionogenitätsverhältnis zwischen kationischem und anionischem Polyelektrolyten auf etwa 1:16 bis 1:2, vorzugsweise 1:12 bis 1:6, ein.

Unter Ionogenität versteht man den molaren Anteil der ladungstragenden ionischen Gruppen des Polymers bzw. des Copolymers, die sich von den vorstehend dargestellten Einheiten I bis IV bzw. V bis VIII ableiten. So beträgt die Ionogenität des kationischen Polyelektrolyten im allgemeinen etwa 40 bis 80 Mol-%, vorzugsweise etwa 50 Mol-%, die des anionischen Polyelektrolyten im allgemeinen 60 bis 90 Mol-%, vorzugsweise etwa 75 Mol-%.

Bei der Flockung der Bentonitsuspension, übt deren Pufferungsvermögen einen gewissen Einfluß aus, so daß die Ionogenitätsverhältnisse nicht unbedingt stöchiometrisch zu sein brauchen.

Vorzugsweise führt man auf der Stufe (c) eine Filtration in einer Membranfilterpresse bis zu einem Druckanstieg auf etwa 4 bis 7 bar durch, worauf man den erhaltenen Filterkuchen durch Nachpressen mittels der Membran bis auf einen Feststoffgehalt von etwa 50 bis 70, vorzugsweise von etwa 60 bis 65 Gew.-% entwässert.

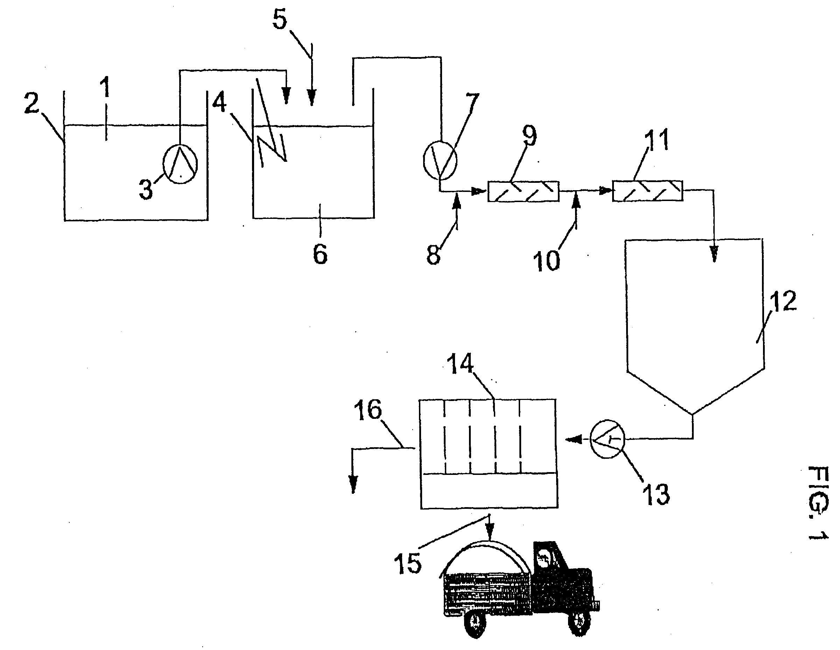

Die Erfindung soll nachfolgend anhand zweier Beispiels erläutert werden. Das Verfahrensfließbild für Beispiel 1 ist in Fig. 1 dargestellt.

### Beispiel 1

Eine gebrauchte Natriumbentonit-Suspension 1 von einer Schlitzwandbaustelle befindet sich in einem Stapelbehälter 2. Sie hat einen Feststoffgehalt von 80 g/l, einen pH-Wert von 12 und (hauptsächlich bedingt durch den Humusgehalt des Bodens) einen chemischen Sauerstoffbedarf (CSB) von 310 mg O₂/Liter. Der CSB-Wert wird nach DIN 38409-H41 bestimmt. Die mittlere Teilchengröße liegt bei 60 µm. Das Zetapotential der Bentonitteilchen wurde unter Verwendung einer Probe mit einem Feststoffgehalt von 0,1 Gew.-% bei einer Temperatur von 20°C zu -20 mV bestimmt. Die Thixotropie und die Teilchengröße der Suspension bewirken, daß keine Sedimentation stattfindet und mechanische Entwässerungsverfahren versagen.

Mittels der Umfüllpumpe 3 wird die Suspension 1 in den Behälter 4 gefördert, in den eine saure Metallsalzlösung 5 zudosiert wird, die Dosiermenge beträgt 9 l/m³. Die Metallsalzlösung enthält als Wirksubstanzen 22 g/l Aluminiumionen, 12 g/l (Eisen)-III-Ionen, 4 g/l Calciumionen und 5 g/l Magnesium-Ionen (jeweils als Chlorid) sowie 1 g/l Kieselsäure, und hat einen pH-Wert von 1. In einer Reaktionszeit von etwa 2 Minuten wird der pH-Wert der Suspension 1 auf 8 reduziert, und das ursprünglich stark negative Zetapotential (-20 mV) der Teilchen wird in die Nähe von 0 mV verschoben. Es bilden sich Mikroflocken mit einer mittleren Teilchengröße von < 100 µm. Die Suspension 6 wäre zwar prinzipiell entwässerbar, doch haben die geringe mechanische Stabilität der gebildeten Flocken und die noch kleine Teilchengröße zur Folge, daß die für die Entwässerung einzusetzenden Apparate bzw. Maschinen sehr groß und damit unwirtschaftlich wären.

Mittels der Beschickungspumpe 7 wird die vorbehandelte Suspension 6 dem Behälter 4 entnommen und in den Vorlagebehälter 12 gefördert. Zwischengeschaltet sind eine Dosiereinrichtung 8 für einen kationischen Polyelektrolyten, gefolgt von einem statischen Mischer 9 sowie eine Dosiereinrichtung 10 für einen anionischen Polyelektrolyten, dem ebenfalls ein statischer Mischer 11 nachgeschaltet ist. Als kationischer Polyelektrolyten wird eine 0,1%ige wäßrige Lösung eines Copolymers aus Acrylamid und einem kationischen Comonomer, dessen Wasserstoffatome am Amidstickstoffatom durch 3 Methylgruppen ersetzt sind (Formel IX), verwendet. Bei dem verwendeten Polyelektrolyten handelte es sich um das Handelsprodukt "PRAESTOL ^{R} 650 BC" der Firma Stockhausen mit einer Ionogenität von 50 Mol-% und einer mittleren Molmasse von 8 x 10⁶g/Mol.

Als anionischer Polyelektrolyt wird eine 0,05%-ige Lösung eines Copolymers aus Acrylamid (Formel VII) und Natriumacrylat (aus Formel IV durch Austausch des H durch Na) mit einer Molmasse von 20 x 10⁶ g/Mol und einer Ionogenität von 75 Mol-% (3 Acrylateinheiten auf eine Acrylamideinheit) in einer Menge von 80 g Feststoff auf 1 m³ Suspension verwendet. (Handelsprodukt MAGNAFLOC ^{R} 1011 der Fa. Allied Colloids Corp., USA).

Der Suspension 6 werden durch die Dosiereinrichtung 8 10 ppm kationischer Polyelektrolyt und durch die Dosiereinrichtung 10 80 ppm anionischer Polyelektrolyt zugesetzt, was einem Ionogenitätsverhältnis von 1:12 entspricht.

Im Vorlagebehälter 12 kommt es zu einer spontanen Phasentrennung zwischen einem Klarwasser und Makroflocken (Zetapotential = 0 mV). Letztere können zwar durch eine Scherbeanspruchung wieder in kleinere Aggregate umgewandelt werden; es zeigt sich jedoch, daß die mittlere Teilchengröße nach einer derartigen Scherbeanspruchung stets etwa 150 µm beträgt und daß diese Flocken eine ausreichende mechanische Stabilität während der Entwässerung aufweisen.

Die nunmmehr optimal konditionierte Suspension wird durch die Kolbenpumpe 13 in die Membranfilterpresse 14 gefördert. Es fällt ein klares Filtrat 16 an, das als Ansatzwasser zur Betonherstellung verwendet oder als unbedenkliches Abwasser in die Kanalisation eingeleitet bzw. versickert werden kann. Der CSB des Filtrats beträgt 25 mg O₂/Liter, d.h. nur etwa 8% des CSB-Wertes der Ausgangssuspension.

Nach dem Abpressen und Entleeren der Filterkammern erhält man einen Filterkuchen 15 mit einem Feststoffgehalt von etwa 65 %. Dieser kann im Deponiebau eingesetzt werden, da er noch eine gewisse Abdichtwirkung zeigt. Er kann auch als Versatzmaterial Verwendung finden oder deponiert werden. Auch die Verwendung als Zuschlagstoff bei der Herstellung von Ziegeln oder Grobkeramik ist möglich.

### Beispiel 2

Die in Beispiel 1 angegebene Arbeitsweise wird mit der Abweichung wiederholt, daß die Dosiereinrichtungen 8 für den kationischen und 10 für den anionischen Polyelektrolyten unmittelbar aufeinanderfolgen oder einander gegenüberliegen und daß diesen Dosiereinrichtungen ein statischer Mischer nachgeschaltet ist. Es werden mit einer 0,1%igen kationischen Polyelektrolytlösung 10 ppm und mit einer 0,05%igen anionischen Polyelektrolytlösung 40 ppm Polymer zugesetzt. Das Verfahren wird dann so, wie in Beispiel 1 beschrieben, weitergeführt. Obwohl die Einsatzmenge des anionischen Polyelektrolyten halbiert worden ist, wird bei der Entwässerung ein sehr gutes Ergebnis erreicht, d.h. man erhält ein klares Filtrat und einen Filterkuchen mit einem Feststoffgehalt von etwa 63%.

## Patentansprüche

1. Verfahren zur Aufarbeitung von gebrauchten wäßrigen Alkalibentonit-Suspensionen durch Ausflocken der Suspension und Abtrennen der Flocke von der überstehenden Flüssigkeit, dadurch **gekennzeichnet,** daß man
(a) die Suspension durch Zugabe von wasserlöslichen Salzen zwei- und/oder dreiwertiger Metalle auf einen pH-Wert von etwa 8 ± 1 und auf eine ungefähr neutrale Grenzflächenladung der Bentonitteilchen einstellt;
(b) der so vorbehandelten Suspension nacheinander oder gleichzeitig einen kationischen und einen anionischen Polyelektrolyten zusetzt, wobei der kationische Polyelektrolyt die Grenzflächen ladung der Bentonitteilchen leicht anhebt und der anionische Polyelektrolyt die Grenzflächenladung der Bentonitteilchen leicht absenkt, wobei man das Verhältnis zwischen kationischem und anionischem Polyelektrolyt so wählt, daß die Grenzflächenladung der Bentonitteilchen ungefähr neutral wird, und eine mechanisch stabile Flocke entsteht, und
(c) die Flocke von der klaren Flüssigkeit abtrennt.

2. Verfahren nach Anspruch 1, dadurch **gekennzeichnet,** daß man von einer Bentonit-Suspension mit einem Feststoffgehalt von etwa 2 bis 12 Gew.-%, einem Salzgehalt von weniger als 100 g/Liter und einem pH-Wert von etwa 9 bis 13 ausgeht.

3. Verfahren nach Anspruch 1 oder 2, dadurch **gekennzeichnet,** daß man in der Stufe (a) eine Lösung, die mindestens ein Al⁺³- und/oder Fe⁺³-Salz und gegebenfalls ein Mg⁺²- und/oder Ca⁺²-Salz einer Mineralsäure, vorzugsweise der Chlorwasserstoffsäure oder Schwefelsäure, enthält, zusetzt.

4. Verfahren nach Anspruch 3, dadurch **gekennzeichnet,** daß man eine Salzlösung aus dem sauren Aufschluß von Bentonit mit folgender Zusammensetzung einsetzt:
| | |
|---|---|
| Al⁺³: | 1 bis 5 Gew.-% |
| Fe⁺³: | 0,5 bis 3 Gew.-% |
| Ca⁺²: | 0,2 bis 2 Gew.-% |
| Mg⁺²: | 0,1 bis 1 Gew.-% |
| Chlorid: | 7 bis 30 Gew.-% |
| Freie HCl: | 0,1 bis 0,5 Gew.-% |

5. Verfahren nach einem der Ansprüche 1 bis 4, dadurch **gekennzeichnet,** daß man auf der Stufe (a) die Grenzflächenladung der Bentonitteilchen auf ein Zetapotential von etwa 0 bis -5 mV einstellt.

6. Verfahren nach einem der Ansprüche 1 bis 5, dadurch **gekennzeichnet,** daß man auf der Stufe (b) einen kationischen Polyelektrolyten aus der Gruppe der Polyacrylamide, vorzugsweise ein Copolymer aus Acrylamid und einem kationischen Comonomer; und einen anionischen Polyelektrolyten aus der Gruppe der Polyacrylamide, vorzugsweise ein Copolymer aus Acrylamid und Acrylat, verwendet.

7. Verfahren nach einem der Ansprüche 1 bis 6, dadurch **gekennzeichnet**, daß man auf der Stufe (b) die Grenzflächenladung der modifizierten Bentonitteilchen auf ein Zetapotential von etwa -3 bis +5 mV, vorzugsweise von etwa -2 bis +2 mV, einstellt.

8. Verfahren nach einem der Ansprüche 1 bis 7, dadurch **gekennzeichnet,** daß man das Ionogenitätsverhältnis zwischen kationischem und anionischem Polyelektrolyten auf etwa 1:16 bis 1:2, vorzugsweise 1:12 bis 1:6, einstellt.

9. Verfahren nach einem der Ansprüche 1 bis 8, dadurch **gekennzeichnet,** daß man auf der Stufe (c) eine Filtration in einer Membranfilterpresse bis zu einem Druckanstieg auf etwa 4 bis 7 bar durchführt, worauf man den erhaltenen Filterkuchen durch Nachpressen mittels der Membran bis auf einen Feststoffgehalt von etwa 50 bis 70, vorzugsweise von etwa 60 bis 65 Gew.-%, entwässert.
